# EUROPEAN PATENT APPLICATION

(11) **EP 3 297 289 A1**
(43) Date of publication of application: **21.03.2018**
(21) Application number: 16807800.4
(22) Date of filing: 09.06.2016
(51) Int. Cl.: H04N 21/482

(54) **DISPLAY DEVICE, USER TERMINAL AND CONTROL METHOD THEREFOR**

(30) Priority: 11.06.2015 KR 20150082524
(71) Applicant: Samsung Electronics Co., Ltd., Suwon-si, Gyeonggi-do 16677 (KR)
(72) Inventor: HA, Jin-ho, Suwon-si Gyeonggi-do 16676 (KR); GO, Seung-han, Yongin-si Gyeonggi-do 17095 (KR)
(74) Representative: Appleyard Lees IP LLP
(86) International application number: PCT/KR2016/006093
(87) International publication number: WO 2016/200160

(57) **Abstract**

A display apparatus, a user terminal and control methods thereof are provided. The display apparatus includes a signal receiver configured to receive a signal for one of a plurality of channels; a display configured to display an image of the one channel based on the received signal; a signal transmitter configured to transmit a signal to at least one user terminal; and a controller configured to, in response to the image being displayed on the display, control the signal receiver to broadcast a signal comprising channel information used for the at least one user terminal to receive additional information of the displayed image. With this, in providing the additional information of the image being displayed, user's convenience may be improved.

## Description

### [Technical Field]

Apparatuses and methods consistent with exemplary embodiments relate to a display apparatus, a user terminal and control methods thereof, and more particularly, a display apparatus, a user terminal and control methods thereof, which can provide additional information about an image for a channel being displayed.

### [Background Art]

A display apparatus, such as a television (TV), receives a broadcast signal for any one channel among a plurality of channels, and displays an image for the one channel based on data obtained from the received broadcast signal.

The image, which is displayed by the display apparatus, may include images for various contents and for user's convenience, additional information for various contents may be further provided. The additional information may be provided in many methods. For example, a method for providing the additional information is disclosed in KR Patent application laid-open No. 10-2012-0116227 "a method for providing additional information and an apparatus therefor". According to this, it is disclosed that additional information for broadcasting content being watched via a broadcast signal receiving apparatus is transmitted to an apparatus, for example, a mobile communication terminal carried by a user, thus to allow the user to conveniently use the additional information.

To be more specific, the mobile communication terminal retrieves the broadcast signal receiving apparatus, i.e., an internet protocol (IP) TV to work along therewith, and then requests and receives channel identification information for and from the IPTV. The mobile communication terminal transmits the received channel identification information to a broadcasting content server. The broadcasting content server checks a playing site for the broadcasting content using the channel identification information, and transmits additional information conforming with the broadcasting content to the mobile communication terminal. The mobile communication terminal outputs the additional information received form the broadcasting content server to provide for the user.

However, according to the related art method, to receive the channel identification information, the mobile communication terminal should retrieve the IP TV and request the channel identification information. If using currently commercialized shore-range wireless communication method, for example, Bluetooth, wireless fidelity (WiFi), etc., the mobile communication terminal requires to first perform advance procedures, such as device retrieval, device registration, connection settings and the like, prior to requesting the channel identification information for the IPTV. Thus, since to be provided with the additional information, the user should always carry out such advance procedures, she or he may feel onerousness and inconvenience. Even if there is any method capable of automatically performing the advance procedures without user's intervention, the user may feel inconvenience in that due to times required to perform the advance procedures, the provision of additional information is delayed.

Also, according to the related art method, the channel identification information from the IPTV is intactly transmitted to the broadcasting content server via the mobile communication terminal. The channel identification information may include, for example, a channel number, a program name, an air time, etc. The broadcasting content server retrieves the additional information using the channel identification information. However, in some cases, the channel identification information may include large data in quantity. In this case, transmitting the channel identification information as it is may be inefficient in term of data transmission, data processing and so on. Also, if retrieving the additional information using the channel identification information itself, effectiveness of the retrieval is reduced as the number of quires is increased, and it is undesirable even in database management.

### [Disclosure]

### [Technical Problem]

Exemplary embodiments address at least the above problems and/or disadvantages and other disadvantages not described above. Also, the exemplary embodiments are not required to overcome the disadvantages described above, and may not overcome any of the problems described above. The exemplary embodiments may provide a display apparatus, a user terminal, and control method thereof, which can improve user's convenience when providing additional information for an image being displayed.

Further, the exemplary embodiments may provide a display apparatus, a user terminal, and control method thereof, which can improve efficiency in data transmission and processing when providing additional information for an image being displayed.

Also, the exemplary embodiments may provide a display apparatus, a user terminal, and control method thereof, which can improve efficiency in information management when providing additional information for an image being displayed.

### [Technical Solution]

In accordance with an aspect of an exemplary embodiment, there is provided a display apparatus including: a signal receiver configured to receive a signal for one of a plurality of channels; a display configured to display an image of the one channel based on the received signal; a signal transmitter configured to transmit a signal to at least one user terminal; and a controller configured to, in response to the image being displayed on the display, control the signal receiver to broadcast a signal including channel information used for the at least one user terminal to receive additional information of the displayed image. With this, the display apparatus may broadcast the channel information for obtaining the additional information for the currently displayed image, so that there is no need for the user terminal to carry out any advance procedure, such as retrieving the display apparatus, registering apparatuses, performing connection settings or the like, to receive the channel information from the display apparatus, thereby not requiring user's addition operations and wait. Accordingly, since the user terminal have only to receive the channel information being broadcasted from the display apparatus, user's onerousness and inconvenience are resolved and thus user's convenience is enhanced.

The broadcasted signal may further include first reference information indicating that the signal is being broadcasted. Thus, the user terminal may determine that the signal is being broadcasted and receive the signal using the first reference information, thereby providing enhanced reliability in signal reception.

The broadcasted signal may further include second reference information used to extract the channel information. Thus, the user terminal may precisely and easily extract the channel information using the second reference information, thereby providing enhanced reliability in information extraction.

The channel information may include information on at least two of a channel name, a country, a zone or a time. The channel information may include a unique identifier generated based on the information on the at least two. Thus, since an information providing server, which provides the additional information, stores the additional information by unique identifier, the additional information may be quickly and easily found, thereby enhancing retrieval effectiveness, as compared with when using a plurality of queries in retrieval. Also, even when the additional information is registered and managed, it may registered and managed by unique identifiers assigned to advertisers, respectively, thereby allowing the additional information to be more effectively registered and managed.

The unique identifier may have a data size smaller than the information on the at least two. Since the channel information of the image being currently displayed is converted into the unique identifier having reduced data size and then transmitted, efficiency in data transmission and processing may be enhanced. In particular, considering that due to characteristics of the broadcast method, the channel information is repeatedly and continuously transmitted, converting and transmitting the channel information in the form of the unique identifier having reduced data size may make the efficiency in data transmission and processing even higher.

The controller may be configured to control, so that in response to the one channel being changed, channel information of changed channel is included in the broadcasted signal. Thus, the channel information, which corresponds in real time to the image being currently displayed, may be broadcasted, thereby increasing reliability in provided additional information and providing more enhanced user's convenience. The broadcasted signal for information provision may be periodically broadcasted.

The controller may be configured to control the signal transmitter to initiate the broadcasting of the signal in response to a user input. Thus, the display apparatus may perform the broadcasting of the channel information only if there is user's request, thereby minimizing load required to broadcast the channel information.

The controller may be configured to control the signal transmitter to initiate the broadcasting of the signal in response to the at least one user terminal coming within a predetermined distance. The apparatus may further included a connector configured to be connected with the least one user terminal, and the controller may be configured to control the signal transmitter to initiate the broadcasting of the signal in response to the least one user terminal being connected to the connector.

In accordance with an aspect of another exemplary embodiment, there is provided a control method of a display apparatus including: receiving a signal for one of a plurality of channels; displaying an image of the one channel based on the received signal; and in response to the image being displayed on the display, broadcasting a signal comprising channel information used for at least one user terminal to receive additional information of the displayed image.

The broadcasted signal may further include first reference information indicating that the signal is being broadcasted.

The broadcasted signal may further include second reference information used to extract the channel information.

The channel information may include information on at least two of a channel name, a country, a zone or a time.

The channel information may include a unique identifier generated based on the information on the at least two.

The unique identifier may have a data size smaller than the information on the at least two.

The broadcasting may include controlling so that, in response to the one channel being changed, channel information of changed channel is included in the broadcasted signal.

The broadcasted signal may be periodically broadcasted.

The broadcasting may include initiating the broadcasting of the signal in response to a user input.

The broadcasting may include initiating the broadcasting of the signal in response to the at least one user terminal coming within a predetermined distance.

The apparatus may further included a connector configured to be connected with the least one user terminal, and the broadcasting may include initiating the broadcasting of the signal in response to the least one user terminal being connected to the connector.

In accordance with an aspect of further another exemplary embodiment, there is provided a user terminal including: a signal receiver configured to receive as a signal broadcasted from a display apparatus, a signal including channel information for receiving additional information of an image displayed on the display apparatus; a communicator configured to communicate with a serer; and a controller configured to extract the channel information included in the received signal, transmit the extracted channel information to the server, receive the additional information of the image corresponding to the transmitted channel information from the server, and perform a control on provision of the received additional information.

The broadcasted signal may further include first reference information indicating that the signal is being broadcasted and the controller may be configured to receive the signal based on the first reference information.

The broadcasted signal may further include second reference information and the controller may be configured to extract the channel information based on the second reference information.

The user terminal may further include a display, and the controller may be configured to display the additional information of the image on the display.

The controller may be configured to control the signal receiver to initiate the reception of the signal in response to a predetermined application being executed.

The controller may be configured to display a graphic user interface (GUI) including a menu item for selecting the application on the display and to execute the application in response to a user selection to the menu item.

The controller may be configured to the signal receiver to receive the signal having predetermined signal strength or more.

In accordance with an aspect of other exemplary embodiment, there is provided a control method of a user terminal including: receiving as a signal broadcasted from a display apparatus, a signal including channel information for receiving additional information of an image displayed on the display apparatus; extracting the channel information included in the received signal and transmitting the extracted channel information to a server; receiving the additional information of the image corresponding to the transmitted channel information from the server; and performing a control on provision of the received additional information.

The broadcasted signal may further include first reference information indicating that the signal is being broadcasted and the receiving the signal including the channel information may include receiving the signal based on the first reference information.

The broadcasted signal may further include second reference information and the extracting may include extracting the channel information based on the second reference information.

The user terminal may further include a display, and the method may further include displaying the additional information of the image on the display.

The receiving the signal including the channel information may include initiating the reception of the signal in response to a predetermined application being executed.

The method may further include displaying a GUI including a menu item for selecting the application on the display and executing the application in response to a user selection to the menu item.

The receiving the signal including the channel information may include receiving the signal having predetermined signal strength or more.

### [Advantages Effects]

As described above, according to the exemplary embodiments, in providing the additional information for the image being displayed, the display apparatus, the user terminal and the control methods thereof may provide the channel information in the broadcast manner to quickly and easily receive the channel information without any advance procedure, thereby enhancing user's convenience.

Further, according to the exemplary embodiments, in providing the additional information for the image being displayed, the display apparatus, the user terminal and the control methods thereof may convert the channel information into the unique identifier having reduced data size and then transmit, thereby enhancing efficiencies in data transmission and processing.

Also, according to the exemplary embodiments, in providing the additional information for the image being displayed, the display apparatus, the user terminal and the control methods thereof may manage database of the additional information using the unique identifier for the additional information, thereby enhancing information management efficiencies.

### [Description of Drawings]

FIG. 1 illustrates a display apparatus, a user terminal, and an information providing server according to an exemplary embodiment;
FIG. 2 illustrates operations of the display apparatus, the user terminal, and the information providing server according to an exemplary embodiment;
FIG. 3 illustrates an image displayed by the display apparatus according to an exemplary embodiment;
FIG. 4 illustrates additional information displayed by the user terminal according to an exemplary embodiment;
FIG. 5 is a block diagram illustrating a construction of the display apparatus according to an exemplary embodiment;
FIG. 6 illustrates a data packet structure of an information providing signal broadcasted by a signal transmitter according to an exemplary embodiment;
FIG. 7 is a flowchart illustrating a control method of the display apparatus according to an exemplary embodiment;
FIG. 8 illustrates a unique identifier for channel information according to an exemplary embodiment;
FIG. 9 is a flowchart illustrating another example of the control method of the display apparatus according to an exemplary embodiment;
FIG. 10 is a flowchart illustrating other example of the control method of the display apparatus according to an exemplary embodiment;
FIG. 11 is a block diagram illustrating a construction of a display apparatus according to another exemplary embodiment;
FIG. 12 is a block diagram illustrating a construction of the user terminal according to an exemplary embodiment;
FIG. 13 is a block diagram illustrating constructions of a signal receiver and a controller according to an exemplary embodiment;
FIG. 14 is a block diagram illustrating another example of constructions of the signal receiver and the controller according to an exemplary embodiment;
FIG. 15 is a flowchart illustrating a control method of the user terminal according to an exemplary embodiment;
FIG. 16 is a flowchart illustrating another example of the control method of the user terminal according to an exemplary embodiment;
FIG. 17 illustrates another example of the data packet structure of the information providing signal according to an exemplary embodiment;
FIG. 18 is a flowchart illustrating further another example of the control method of the user terminal according to an exemplary embodiment;
FIG. 19 illustrates a GUI for selecting an application displayed by the user terminal according to an exemplary embodiment;
FIG. 20 is a flowchart illustrating other example of the control method of the user terminal according to an exemplary embodiment;
FIG. 21 is a block diagram illustrating a configuration of the information providing server according to an exemplary embodiment;
FIG. 22 illustrates additional information stored by a storage of the information providing server according to an exemplary embodiment; and
FIG. 23 is a flowchart illustrating a control method of the information providing server according to an exemplary embodiment.

### [Best Mode]

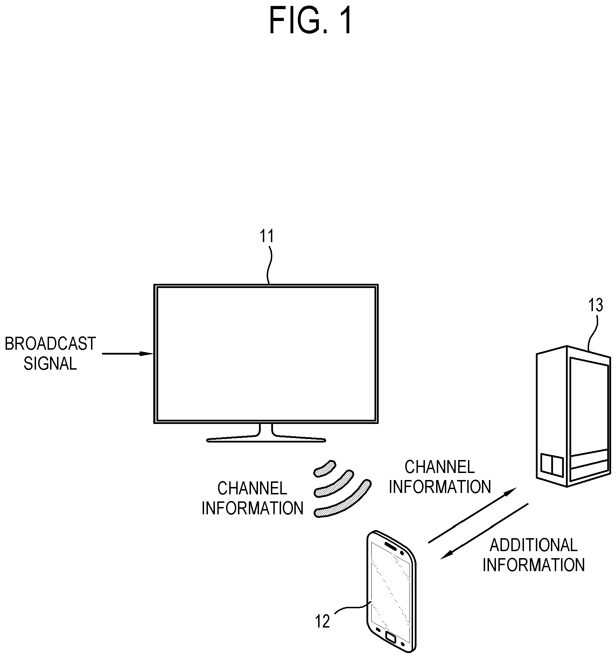

Below, exemplary embodiments will be described in detail with reference to accompanying drawings. FIG. 1 illustrates a display apparatus, a user terminal, and an information providing server according to an exemplary embodiment. The display apparatus 11 according to an exemplary embodiment may be implemented as, for example, a television (TV). The display apparatus 11 displays an image based on a broadcast signal for any one among a plurality of channels. The user terminal 12 may be implemented as, for example, a mobile terminal, such as a smart phone, a smart pad, a notebook personal computer (PC), etc. The information providing server 13 may be implemented as, for example, a web server. The user terminal 12 may be connected with the information providing server 13 via a network to transmit and receive information thereto and therefrom.

The display apparatus 11 provides information on an image (hereinafter, referred as 'channel information'), which is currently displayed. The information providing server 13 provides information (hereinafter, referred as 'additional information'), which is related with the image being displayed on the display apparatus 11. The user terminal 12 obtains the additional information provided by the information providing server 13 using the channel information provided by the display apparatus 11 and provides the obtained additional information for a user.

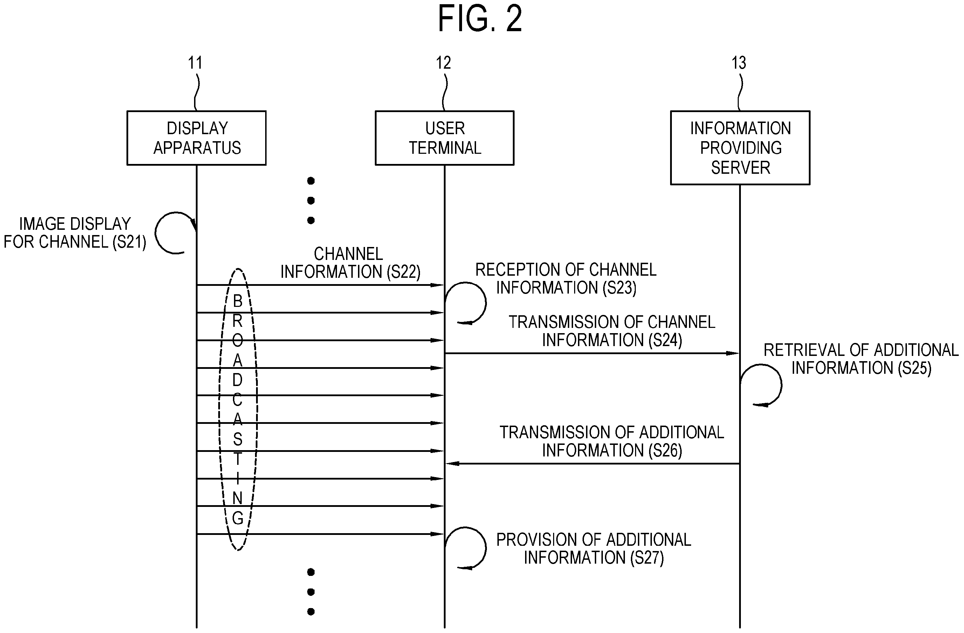

FIG. 2 illustrates operations of the display apparatus, the user terminal, and the information providing server according to an exemplary embodiment. The display apparatus 11 displays an image based on a broadcast signal for any one among a plurality of channels (S21). Contents for the image displayed by the display apparatus 11 are not limited and includes various genres of contents, such as, movie, drama, news, sports, education, entertainment, etc.

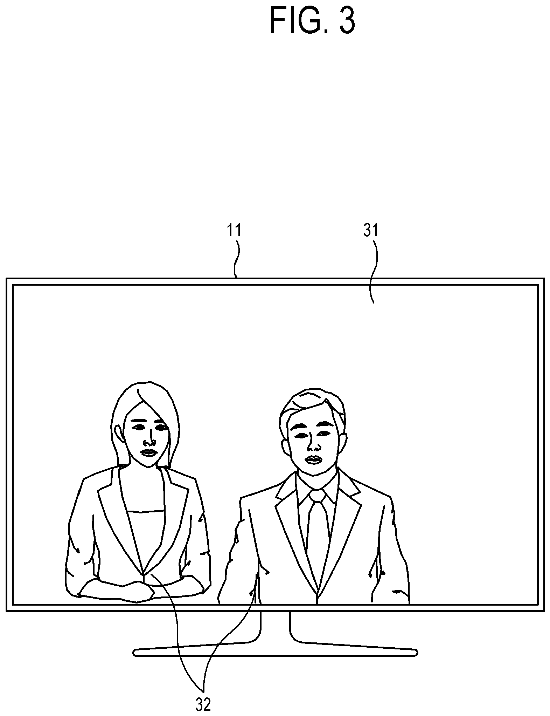

FIG. 3 illustrates an image displayed by the display apparatus 11 according to an exemplary embodiment. As illustrated in FIG. 3, the display apparatus 11 may display an image 31 for drama. The image 31 according to an exemplary embodiment may be a scene in which two characters wearing suits 32 appear. A user, which is watching the image 31 of the display apparatus 11, sees the suits 32 that the characters appeared in the image 31 are wearing, and thus may wonder what kinds of products the suits 32 are or want to buy and wear the same suits 32.

Referring again to FIG. 2, the display apparatus 11 broadcasts channel information for obtaining the additional information for the image being currently displayed (S22). The user terminal 12 as a mobile terminal of the user watching the image 31 of the display apparatus 11 may be being placed near the display apparatus 11 or held with user's hands. The user terminal 12 receives the channel information broadcasted by the display apparatus 11 (S23). The user terminal 12 transmits the received channel information to the information providing server 13 (S24). The information providing server 13 retrieves and finds out additional information corresponding to the image being currently displayed, based on the channel information received from the user terminal 12 (S25). The information providing server 13 transmits the found-out additional information to the user terminal 12 (S26). The user terminal 12 provides the additional information transmitted from the information providing server 13 for the user (S27). The addition information provided according to an exemplary embodiment are not limited in content and may include any and all information related with the image being currently displayed.

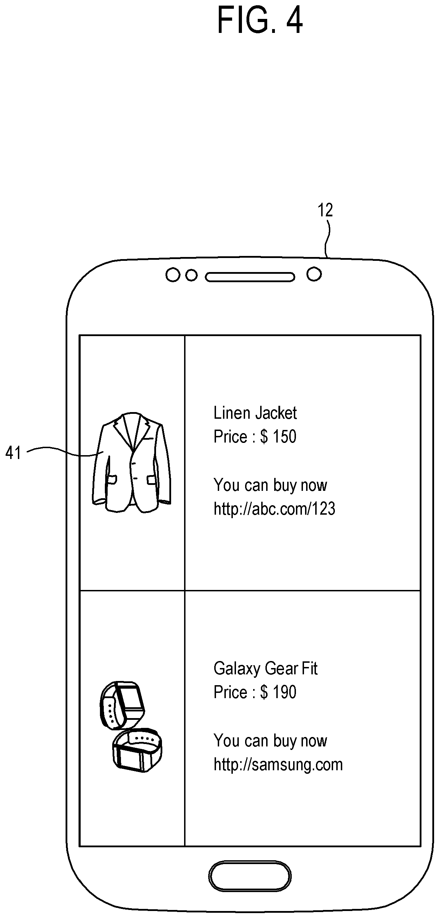

The user terminal 12 may display the addition information transmitted from the information providing server 13. FIG. 4 illustrates additional information displayed 41 by the user terminal 12 according to an exemplary embodiment. The user terminal 12 may display the addition information 41 for the image 31 being currently displayed. The addition information 41 according to an exemplary embodiment may be information on the suits 32 that the characters appeared in the image 31 are wearing, for example, information, such as pictures, product names, dealers or retailers, prices and the like for products, such as the suits 32. Accordingly, the user may be directly provided with the addition information 41 of the image 31 while watching the image 31 via the display apparatus 11, and thereby user's convenience is enhanced.

In particular, according to an exemplary embodiment, the display apparatus 11 may broadcast the channel information for obtaining the additional information for the image being currently displayed, so that there is no need for the user terminal 12 to carry out any advance procedure, such as retrieving the display apparatus 11, registering apparatuses, performing connection settings or the like, to receive the channel information from the display apparatus 11, thereby not requiring user's addition operations and wait. Thus, since the user terminal 12 have only to receive the channel information being broadcasted from the display apparatus 11, user's onerousness and inconvenience are resolved and thereby user's convenience is more enhanced.

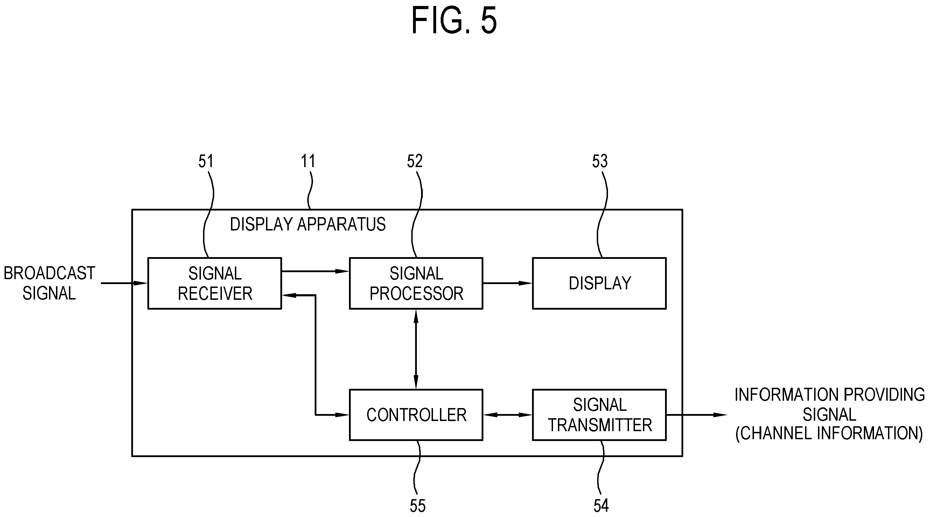

FIG. 5 is a block diagram illustrating a construction of the display apparatus 11 according to an exemplary embodiment. As illustrated in FIG. 5, the display apparatus 11 may include a signal receiver 51, a signal processor 52, a display 53, a signal transmitter 54 and a controller 55.

The signal receiver 51 receives a broadcast signal. The image receiver 51 may receive the broadcast signal from a broadcast signal transmitting apparatus of a broadcasting station, or a relay apparatus, which relays the broadcast signal from the broadcast signal transmitting apparatus. The broadcast signal received by the signal receiver 51 may be a wired signal or a wireless signal. The broadcast signal received by the signal receiver 51 may be a digital signal or an analog signal. The broadcast signal received by the signal receiver 51 may be a terrestrial or ground-wave signal, a cable signal, a satellite signal or a network signal.

Under a control of the controller 55, the signal receiver 51 may receive a broadcast signal for any one among a plurality of channels. The broadcast signal contains broadcasting contents provided by the broadcasting station. The broadcast contents includes broadcast programs for various contents, such as drama, movie, news, sports, music, video on demand (VOD), etc. and are not limited in content. The broadcast contents includes videos and may further include at least one of audios or additional information.

The signal processor 52 processes the broadcast signal received by the signal receiver 51. According to the control of the controller 55, the signal processor 52 processes the broadcast signal to extract data for displaying an image of the broadcast content for one channel and channel information used to obtain additional information of the image being currently displayed. The signal processor 52 performs a signal processing corresponding to a standard of the received broadcast signal to extract the data for the broadcast content and the channel information.

The display 52 may display an image based on the data for the broadcast content extracted by the signal processor 52. The display 52 may be provided with a display element of any one type among a plurality of types including a liquid crystal display (LCD), a plasma display panel(PDP), an organic light emitting diodes (OLED), etc.

The signal transmitter 54 broadcasts the channel information used for the user terminal 12 to obtain the additional information of the image, which is currently displayed. The signal transmitter 54 may broadcast a signal (hereinafter, an 'information providing signal') including the channel information according to a given signal transmitting standard. The signal transmitting standard by which the signal transmitter 54 broadcasts the information providing signal may be Bluetooth low energy (BLE), near field communication (NFC), etc.

The signal transmitter 54 may broadcast the information providing signal, so that it further includes information (hereinafter, referred as 'reference information') indicating that the channel information is being broadcasted with included in the information providing signal. The signal transmitter 54 may broadcast the information providing signal in the form of a data packet.

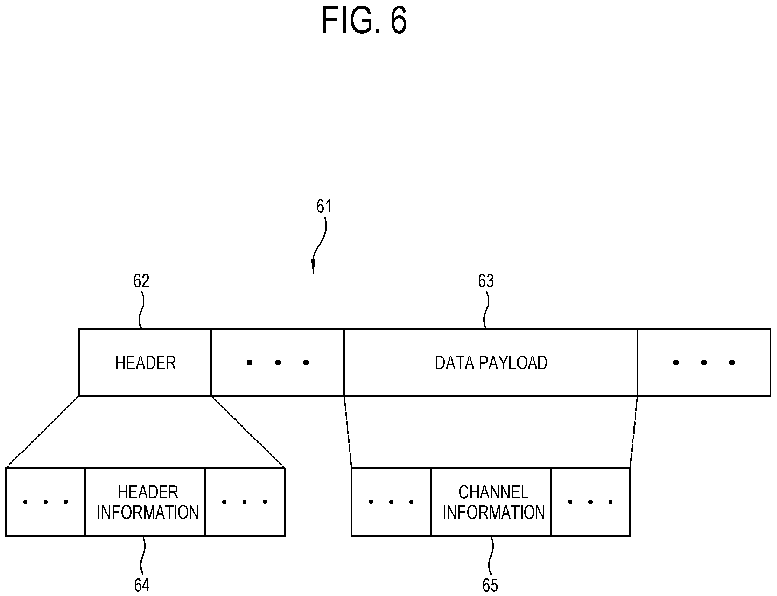

FIG. 6 illustrates a data packet structure of an information providing signal broadcasted 61 by the signal transmitter 54 according to an exemplary embodiment. The data packet of the information providing signal 61 may include a header 62, and a data payload 63. The header 62 of the information providing signal 61 may include reference information 64. The data payload 63 of the information providing signal 61 may include channel information 65. The reference information 64 may be a specific value assigned as a predetermined number of bits in a predetermined location of the header 62. The channel information 65 as a specific value assigned as a predetermined number of bits in a predetermined or arbitrarily set location of the data payload 63 may be varied according to a content of the image being currently displayed. The reference information 64 may include information for extracting the channel information 65 from the data payload 63, for example, information, such as a location, the number of bits and the like of the channel information 65 in the data payload 63.

Referring again to FIG. 5, in response to the image being displayed on the display 53, the controller 55 controls the signal transmitter 54 to broadcast the information providing signal 61, which includes the channel information 65 used for the user terminal 12 to receive the additional information of the displayed image and the reference information 64 used to extract the channel information 65. The controller 55 may include a nonvolatile memory in which a control program is stored, a volatile memory in which at least a portion of the control program is loaded, and a microprocessor, which executes the control program.

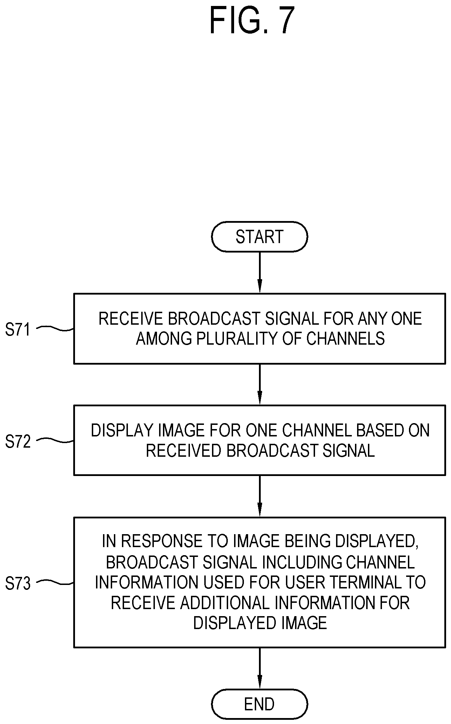

FIG. 7 is a flowchart illustrating a control method of the display apparatus 11 according to an exemplary embodiment. The control method of the display apparatus 11 described below may be carried out by control operations of the controller 55. At an operation S71, the display apparatus 11 receives a broadcast signal for any one among a plurality of channels. At an operation S72, the display apparatus 11 displays an image for the one channel based on the received broadcast signal. At an operation S73, in response to the image for the one channel being displayed, the display apparatus 11 broadcasts an information providing signal 61 including channel information 65 used for the user terminal 12 to receive additional information of the displayed image. The information providing signal 61 may further include reference information 64 used to indicate that the information providing signal 61 is being broadcasted or to extract the channel information 65. The display apparatus 11 may periodically broadcast the information providing signal 61.

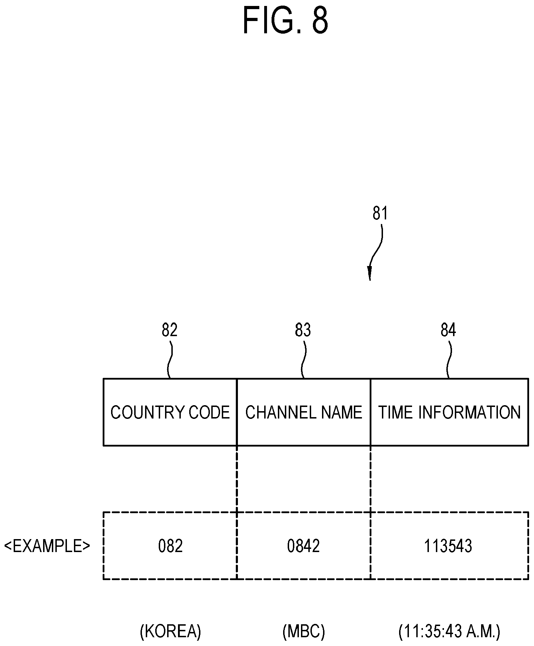

Referring to again to FIG. 6, the channel information 65 according to an exemplary embodiment may include information at least two of a channel name, a country, a district or zone, or a time, which are related with the channel corresponding to the image being currently displayed. For example, the channel information 65 may include a unique identifier generated combining a country code, a channel name, and time information of the channel corresponding to the currently displayed image. FIG. 8 illustrates a unique identifier 81 of the channel information 65 according to an exemplary embodiment. As illustrated in FIG. 8, the unique identifier 81 of channel information 65 according to an exemplary embodiment is composed of a combination of values, which correspond respectively to a country code 82, a channel name 83, and time information 84 of the channel corresponding to the currently displayed image. For example, if a country in which the channel corresponding to the currently displayed image is broadcasted is 'Korea', a value for the country code 82 of the unique identifier 81 may be '082'. If a broadcasting station of the channel is 'MBC', a value for the channel name 83 of the unique identifier 81 may be '0842'. If a time in which the channel is broadcasted is '11:35:43 a.m.', a value for the time information 84 of the unique identifier 81 may be '113523'. The value for the channel name 83 of the unique identifier 81 may be a value obtained by hashing corresponding information.

In other words, when the channel information 65 according to an exemplary embodiment is transmitted, corresponding information is not transmitted as it is, but converted and then transmitted in the form of the unique identifier 81. In this conversion process, data for the unique identifier 81 of the channel information 65 gets smaller in size than original data of the channel information 65. As such, according to the exemplary embodiment, the channel information 65 of the currently displayed image may be converted into and transmitted in the unique identifier 81 having the data reduced in size, thereby enhancing efficiency in data transmission and processing. In particular, considering that due to characteristics of the broadcast manner, the channel information 65 is repeatedly and continuously transmitted, converting and transmitting the channel information 65 in the form of the unique identifier 81 having the data reduced in size may make the efficiency in data transmission and processing even higher.

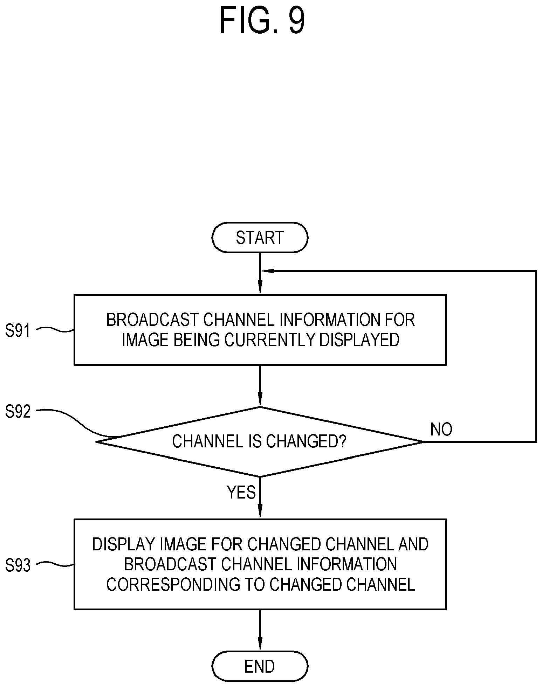

FIG. 9 is a flowchart illustrating another example of the control method of the display apparatus 11 according to an exemplary embodiment. The display apparatus 11 according to an exemplary embodiment broadcasts channel information corresponding to a channel changed according to channel change. First, at an operation S91, the display apparatus 11 broadcasts an information providing signal including channel information for an image being currently displayed. At an operation S92, the display apparatus 11 checks whether a channel of the currently displayed image is changed. The channel change may be carried out by a user input. The display apparatus 11 may determine the channel change or non-change by checking whether there is a user input to request the channel change.

As another exemplary embodiment, if receiving a broadcast signal from a set-top box, the display apparatus 11 may analyze a currently displayed image to determine whether a channel of the currently displayed image is changed. In the image analysis, for example, an automatic content recognition technique may be used. The display apparatus 11 may temporality stop broadcasting channel information corresponding to the channel before the change during the image analysis. If the image analysis is completed, the display apparatus 11 may resume broadcasting channel information corresponding to newly changed channel.

At an operation S92, if the channel is not changed, the display apparatus 11 returns to the operation S91 to continue broadcasting the information providing signal including the channel information of the currently displayed image. If the channel is changed, at an operation S93, the display apparatus 11 displays an image of changed channel and broadcasts an information providing signal including channel information corresponding to the changed channel.

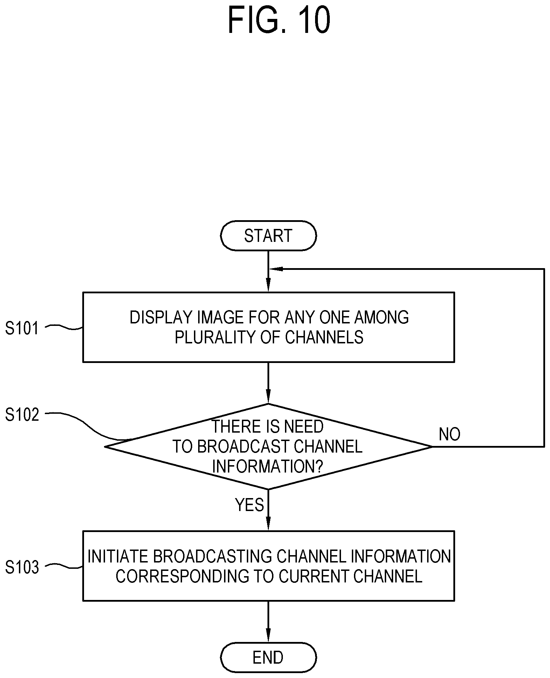

FIG. 10 is a flowchart illustrating other example of the control method of the display apparatus 11 according to an exemplary embodiment. The display apparatus 11 according to an exemplary embodiment selectively broadcasts channel information. First, at an operation S101, the display apparatus 11 displays an image for any one among a plurality of channels. At an operation S102, the display apparatus 11 checks whether there is a need to broadcast channel information for an image being currently displayed. The need or non-need for the broadcasting of the channel information may be determined by a user input. For example, the user may input a broadcasting request for the channel information using a user input receiver provided in the display apparatus 11 or a remote controller. Alternatively, the user may input a voice command corresponding to the broadcasting request for the channel information using a voice receiver provided in the display apparatus 11. Also, the user may input a motion corresponding to the broadcasting request for the channel information using a motion detector or sensor provided in the display apparatus 11.

For example, referring again to FIG. 3, if the user watching the image 31 of the display apparatus 11 sees the suits 32 that the characters appeared in the image 31 are wearing and wants to receive additional information on the same suits 32, she or he may input a broadcasting request for channel information of corresponding channel. The display apparatus 11 may determine whether there is a need to broadcast the channel information by checking whether there is any user input to request the broadcasting to the channel information.

As another exemplary embodiment, if the user terminal 12 comes or approaches within a predetermined distance, the display apparatus 11 may determine that there is a need to broadcast the channel information. The approach or non-approach of the user terminal 12 within the predetermined distance of the display apparatus 11 may be determined by signal detection, image detection, ultrasonic detection and so on. The display apparatus 11 may store identification information for specific user terminal 12 and if the specific user terminal 12 approaches within the predetermined distance, determine that there is a need to broadcast the channel information.

As other exemplary embodiment, the display apparatus 11 may further include a connector, which is connectable with the user terminal 12 and if the user terminal 12 is connected to the connector, determine that there is a need to broadcast the channel information. The connector according to the exemplary embodiment may be, for example, a universal serial bus (USB) connector, and the user terminal 12 may be connected to the USB connector via a USB cable.

Referring again to FIG. 10, at an operation S102, if it is not determined that there is a need to broadcast the channel information, the display apparatus 11 returns to the operation S101 to continue displaying the image for the current channel. If it is determined that there is a need to broadcast the channel information, at an operation S103, the display apparatus 11 initiates broadcasting an information providing signal including channel information corresponding to the current channel.

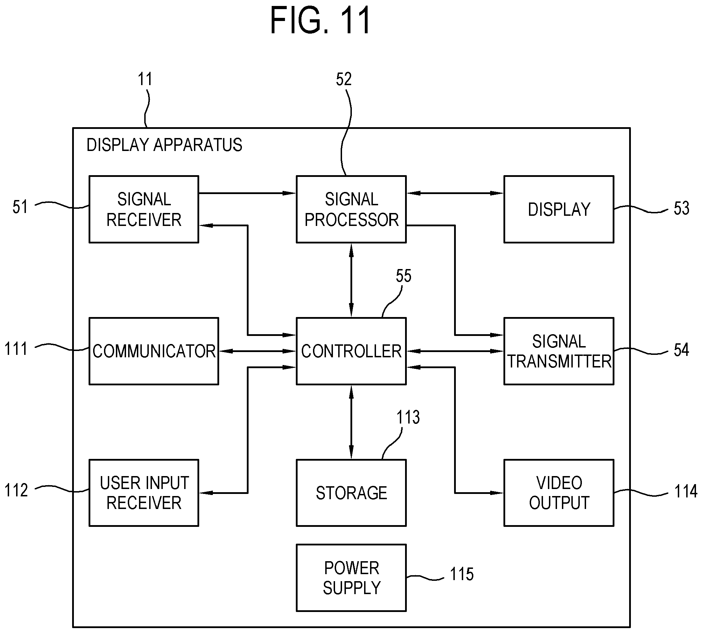

FIG. 11 is a block diagram illustrating a construction of a display apparatus 11 according to another exemplary embodiment. In addition to the configurations of the illustrated in FIG. 5, the display apparatus 11 illustrated in FIG. 11 may further include a communicator 111, an audio output 114, a user input receiver 112, a power supply 115, and a storage 113.

The communicator 111 may communicate with servers or other terminals, such as a PC and the like, via a network, such as an internet, or communicate with a notebook PC or mobile terminals, such as a smart phone, a smart pad and the like, in wireless ways, such as WiFi, Bluetooth and the like. The communicator 111 may receive a video signal and/or an audio signal from the servers, the mobile terminals, the notebook PC and the like. The video signal and/or the audio signal received via the communicator 111 may be processed by the signal processor 52. The communicator 111 may be configured separately from the signal receiver 54 and also implemented as being integrated as a body with the signal receiver 54.

The audio output 114 may include a speaker to output an audio based on an audio signal processed by the signal processor 52. The user input receiver 112 may include a remote control signal receiver to receive a remote control signal corresponding to a user input and outputted from a remote controller. The user input receiver 112 may further include a button input unit having at least one button for receiving the user input. The user may select any one channel she or he want to receive among a plurality of channels via the remote controller. The user input receiver 112 may further include at least one of a voice input receiver to receive a voice corresponding to the user input, a camera to photograph an image corresponding to the user input, or a motion detector or sensor to detect a motion corresponding to the user input.

The storage 113 may store a computer program needed for operating the display apparatus 1 and related information. The computer program needed for operating the display apparatus 1 includes a control program, which corresponds to the operations of the controller 55. The control program of the controller 55 includes at least one of a BIOS, a device driver, an operating system or an application program. The storage 113 may store channel information extracted from the broadcast signal. The storage 113 may include more than one or two nonvolatile memory.

The power supply 115 receives a power from an external to supply to respective elements of the display apparatus 1 in levels suitable therefor. On the other hands, the signal receiver 51 may include a tuner to receive the broadcast signal. The signal receiver 51 may further include an interface device connected with an imaging apparatus, such as a digital versatile disc (DVD) player, a PC, a set-top box and the like, a storing apparatus, such as a USB storing medium and the like, etc. to receive a video signal and/or an audio signal therefrom. Also, the controller 55 may include at least more than two processors and, for example, include a main central processing unit (CPU) to perform main controls including the operations of the controller 55, and a subsidiary processor to perform subsidiary controls, such as power control, input and output controls, etc. The display apparatus 11 according to an exemplary embodiment is not limited to the configurations as illustrated in FIG. 11, and may be materialized to exclude at least one element from among the elements illustrated in FIG. 11, or include another element in addition to the elements illustrated in FIG. 11.

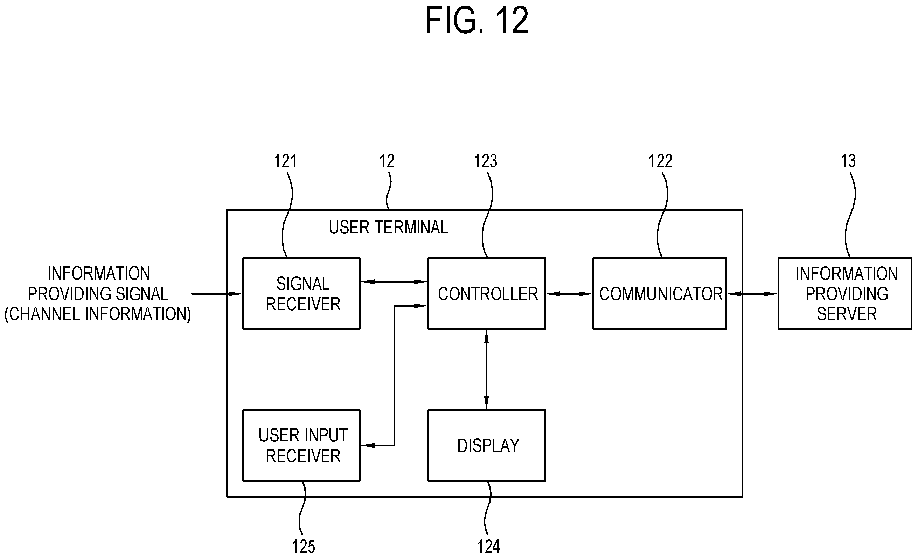

FIG. 12 is a block diagram illustrating a construction of the user terminal 12 according to an exemplary embodiment. The user terminal 12 according to an exemplary embodiment may include a signal receiver 121, a communicator 122 and a controller 123. The signal receiver 121 receives an information providing signal broadcasted from the display apparatus 11. The information providing signal received by the signal receiver 121 includes channel information for receiving additional information for an image displayed on the display apparatus 11, and reference information for extracting the channel information. The signal receiver 121 receives an information providing signal according to a signal transmitting standard by which the signal transmitter 54 of the display apparatus 11 broadcasts the information providing signal.

The communicator 122 communicates with the information providing server 13. As illustrated in FIG. 1, the communicator 122 may communicate with the information providing server 13 via the network.

The controller 123 extracts the channel information based on the reference information included in the information providing signal received by the signal receiver 121. The controller 123 controls the communicator 122 to transmit the extracted channel information to the information providing server 13 and to receive additional information corresponding to the channel information from the information providing server 13. The controller 123 performs control on the additional information received from the information providing server 13. The user terminal 12 according to an exemplary embodiment may further include a display 124 operable to display an image. The controller 123 may display the additional information received from the information providing server 13 on the display 124. For example, as illustrated in FIGS. 3 and 4, the controller 123 may display as addition information 41 related with the suits 32 shown in the image 31, information, such as pictures, product names, dealers or retailers, prices and the like for products, such as the suits 32. The controller 123 include a nonvolatile memory in which a control program is stored, a volatile memory in which at least a portion of the control program is loaded, and a microprocessor to execute the control program. The user terminal 12 may further include a user input receiver 125 to receive a user input. The user input receiver 125 may include, for example, a touch sensor or detector to receive a touch input of the user, a voice input receiver to receive a voice command of the user and so on.

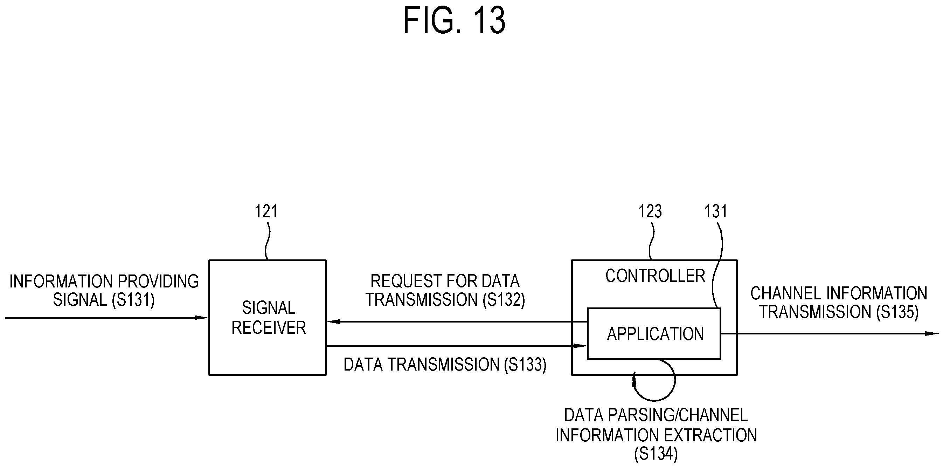

FIG. 13 is a block diagram illustrating constructions of the signal receiver 121 and the controller 123 according to an exemplary embodiment. The controller 123 according to an exemplary embodiment may include an application 131. The signal receiver 121 catches and receives an information providing signal broadcasted from the display apparatus 11 (S131). The information providing signal may include packet data according to, for example, BLE standard. As an exemplary embodiment, as illustrated in FIG. 6, the signal receiver 121 may catch and receive an information providing signal 61 based on reference information 64 included in a header 62 of the information providing signal 61. In other words, if the reference information 64 included in the header 62 of the information providing signal 61 is a specific value of a predetermined number of bits in a predetermined location, the signal receiver 121 may determine that the information providing signal is the very information providing signal 61 broadcasted from the display apparatus 11 and catch and receive it.

The application 131 requests a transmission of data included in the information providing signal received by the signal receiver 121 (S132). In response to the request of the application 131, the signal receiver 121 transmits the data included in the received information providing signal to the application 131 (S133). The application 131 parses the data transmitted from the signal receiver 121 to extract channel information (S134). For example, as illustrated in FIG. 6, the application 131 parses the data to extract channel information 65 included in a data payload 63. As an exemplary embodiment, to extract the channel information 65, the application 131 may use the reference information 64 included in the header 62 as illustrated in FIG. 6. For example, the application 131 may also extract the channel information 65 based on information, such as a location, the number of bits and the like of the channel information 65 in the data payload 63, which are indicated by the reference information 62. The application 131 transmits the extracted channel information to the communicator 122 (S135).

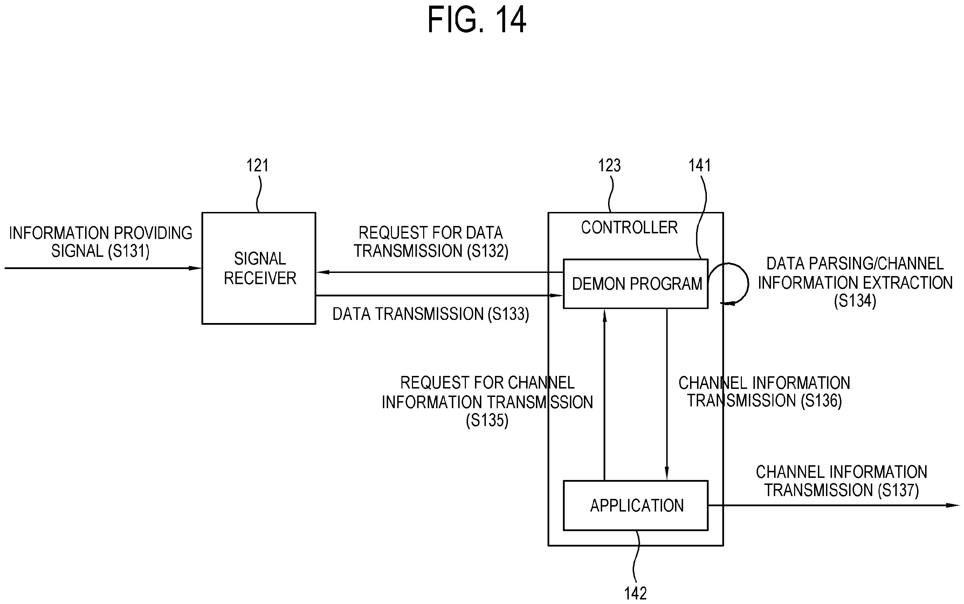

FIG. 14 is a block diagram illustrating another example of constructions of the signal receiver 121 and the controller 123 according to an exemplary embodiment. In the following description, explanations on configurations of the signal receiver 121 and the controller 123 identical to or similar with those as illustrated in FIG. 13 will be omitted. The controller 123 according to an exemplary embodiment may include a demon program 141 and an application 142. The signal receiver 121 catches and receives an information providing signal broadcasted from the display apparatus 11 (S131).

The demon program 141 requests a transmission of data included in the information providing signal received by the signal receiver 121 (S132). In response to the request of the demon program 141, the signal receiver 121 transmits the data included in the received information providing signal to the demon program 141 (S133). The demon program 141 parses the data transmitted from the signal receiver 121 to extract channel information (S134). The application 142 requests a transmission of the channel information extracted by the demon program 141 (S135). In response to the request of the application 142, the demon program 141 transmits the extracted channel information to the application 142 (S136). The application 142 transmits the channel information transmitted from the demon program 141 to the communicator 122 (S137).

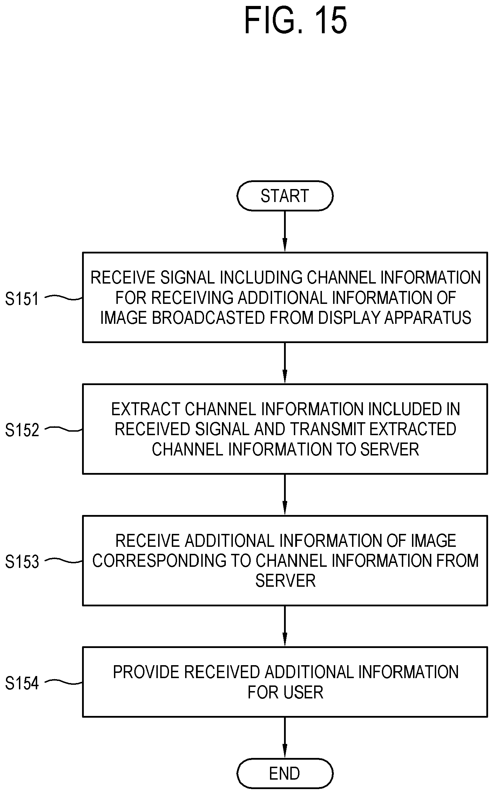

FIG. 15 is a flowchart illustrating a control method of the user terminal 12 according to an exemplary embodiment. First, at an operation S151, the user terminal 12 receives as a signal broadcasted from the display apparatus 11, an information providing signal including channel information for receiving additional information of an image displayed on the display apparatus 11. At an operation S152, the user terminal 12 extracts the channel information included in the received information providing signal and transmits the extracted channel information to the information providing server 13. At an operation S153, the user terminal receives additional information of the image corresponding to the transmitted channel information from the information providing server 13. At an operation S154, the user terminal 12 provides the additional information received from the information providing server 13 for the user.

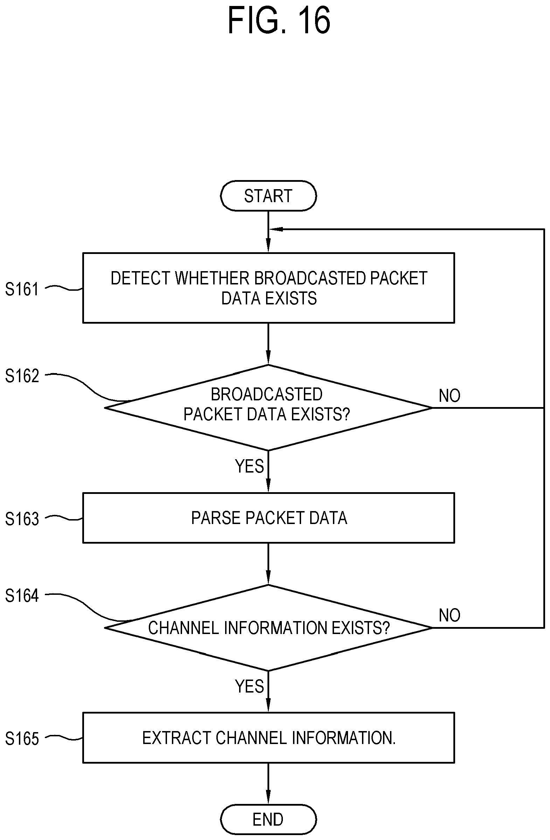

FIG. 16 is a flowchart illustrating another example of the control method of the user terminal 12 according to an exemplary embodiment. First, at an operation S161, the user terminal 12 detects whether packet data of specific transmitting standard exists in a signal, which is currently broadcasted. The specific transmitting standard may be, for example, BLE. The existence or nonexistence of the currently broadcasted packet data may be determined using reference information 64, as illustrated in FIG. 6. At an operation S162, if the currently broadcasted packet data does not exist, the user terminal 12 returns to the operation S161 to continue detecting whether the currently broadcasted packet data exists. At the operation S162, if the currently broadcasted packet data exists, at an operation S163, the user terminal 12 parses the packet data. At an operation S164, the user terminal 12 determines whether channel information exists in the parsed packet data. If the channel information does not exist in the parsed packet data, the user terminal 12 returns to the operation S161 to continue detecting whether the currently broadcasted packet data exists. If the channel information exists in the parsed packet data, at an operation S165, the user terminal 12 extracts the channel information from the parsed packet data.

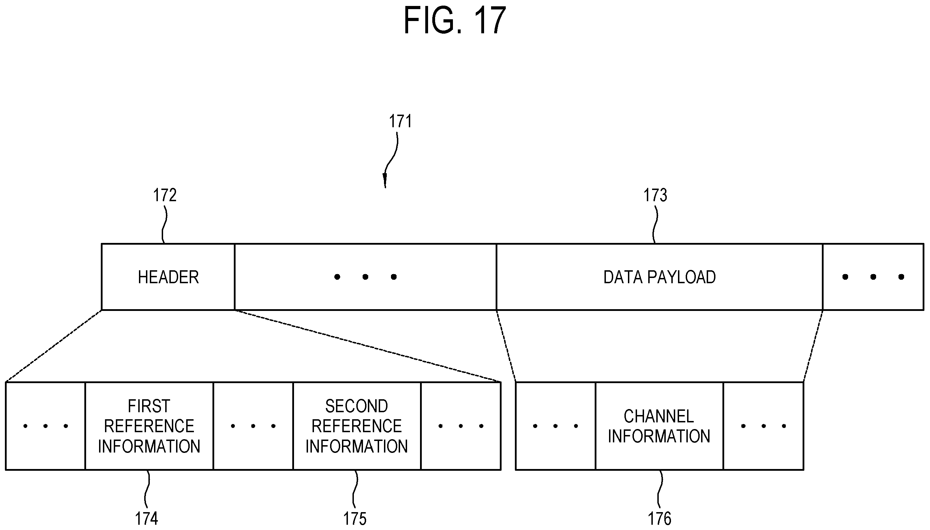

FIG. 17 illustrates another example of the data packet structure of the information providing signal according to an exemplary embodiment. In the following description, explanations on configurations of the information providing signal identical to or similar with those as illustrated in FIG. 6 will be omitted. The data packet of the information providing signal 171 according to an exemplary embodiment may include a header 172 and a data payload 173. The header 172 of the information providing signal 171 may include first reference information 174 and second reference information 175. The data payload 173 of the information providing signal 171 may include channel information 176. The first reference information 174 may be a specific value assigned as a predetermined number of bits in a predetermined location of the header 172. The first reference information 174 indicates that the information providing signal 171 is being broadcasted. Referring to the operations S161 and S162 of FIG. 16, the user terminal 12 may determine that currently broadcasted packet data exists, based on the first reference information 174 included in the header 172 of the information providing signal 171. The second reference information 175 may include information for extracting the channel information 176 from the data payload 173, for example, information, such as a location, the number of bits and the like of the channel information 176 in the data payload 173. Referring to the operations S163 to S165 of FIG. 16, the user terminal 12 may extract the channel information 176 from the currently broadcasted packet data, based on the second reference information 175 included in the header 172 of the information providing signal 171.

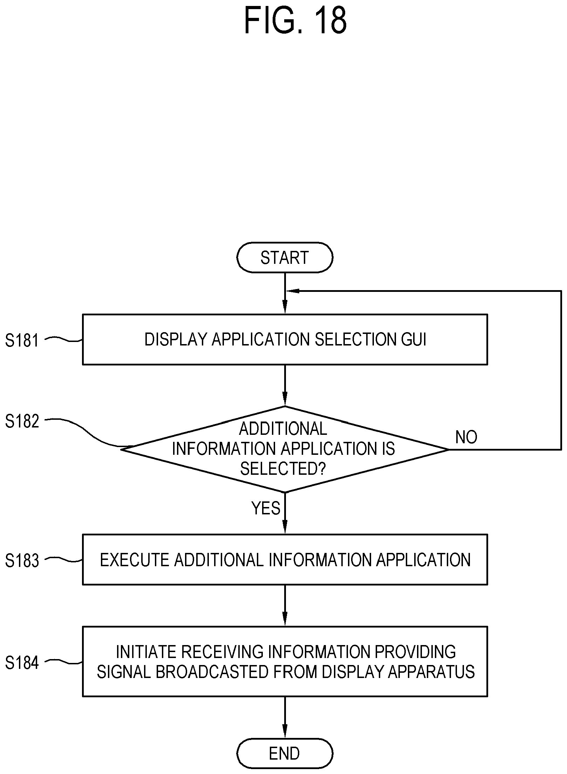

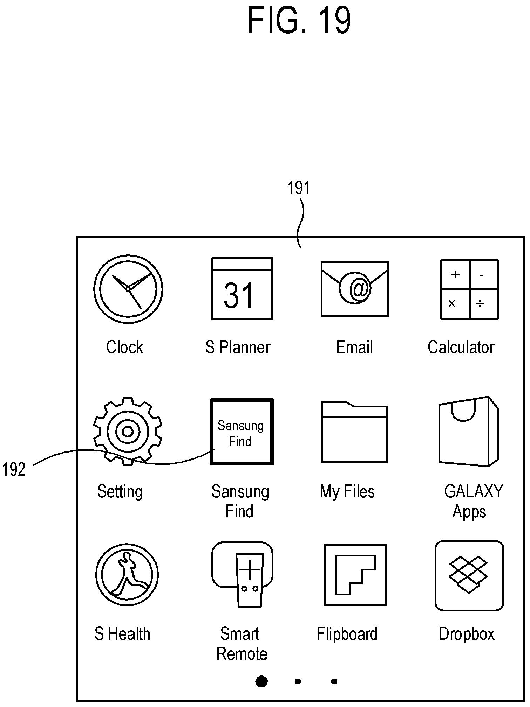

FIG. 18 is a flowchart illustrating further another example of the control method of the user terminal 12 according to an exemplary embodiment. In response to a user input, the user terminal 12 according to an exemplary embodiment initiates receiving an information providing signal broadcasted from the display apparatus 11. First, at an operation S181, the user terminal 12 displays a graphic user interface (GUI) for selecting an application. FIG. 19 illustrates a GUI 191 for selecting an application displayed by the user terminal 12 according to an exemplary embodiment. The GUI 191 includes a plurality of menu items, which corresponds to a plurality of applications, respectively. In the plurality of menu items, there is a menu item 192 corresponding to an application for obtaining additional information of an image being displayed on the display apparatus 11.

Referring again to FIG. 18, at an operation S182, the user terminal 12 determines whether the user has selected the menu item 192 corresponding to the application for obtaining the additional information. If the user did not select the menu item 192 of the application for obtaining the additional information, the user terminal 12 returns to the operations S181. If the user has selected the menu item 192 of the application for obtaining the additional information, at an operation S183, the user terminal 12 executes the application for obtaining the additional information. At an operation S184, the user terminal 12 initiates receiving an information providing signal broadcasted from the display apparatus 11. As described above, according to the user terminal 12 according to an exemplary embodiment, if the user has only to simply select the menu item 192 of the application, the user terminal 12 automatically receives the information providing signal broadcasted from the display apparatus 11 and obtains the additional information using the channel information of the received information providing signal to provide for the user, so that there is no need for the user to retrieve apparatuses, perform connection settings or to wait the apparatus retrieving or the connection settings, thereby providing more enhanced user's convenience.

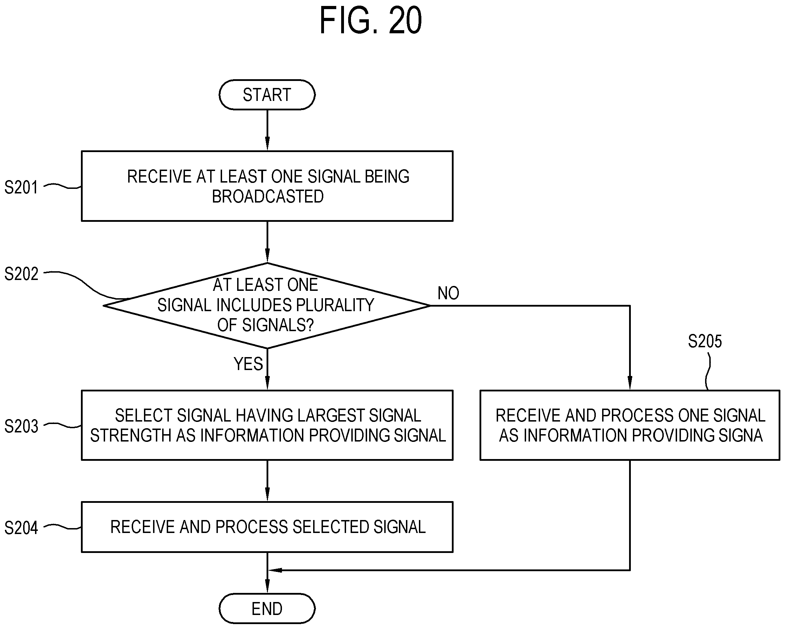

FIG. 20 is a flowchart illustrating other example of the control method of the user terminal 12 according to an exemplary embodiment. The user terminal 12 according to an exemplary embodiment receives as an information providing signal, a signal having largest signal strength from among a plurality of signals being broadcasted. First, at an operation S201, the user terminal 12 receives at least one signal being broadcasted. At an operation S202, the user terminal 12 checks whether the broadcasted at least one signal includes a plurality of signals. If the broadcasted at least one signal include one signal, at an operation S205, the user terminal 12 receives and processes the one signal as an information providing signal broadcasted from the display apparatus 11. If the broadcasted at least one signal includes a plurality of signals, at an operation S203, the user terminal 12 selects a signal having largest signal strength among the plurality of broadcasted signals as an information providing signal broadcasted from the display apparatus 11. In an exemplary embodiment, the signal strength of the broadcasted signals may be determined using, for example, a received signal strength indicator (RSSI). At an operation S204, the user terminal 12 receives and processes the selected signal. As such, if there is a plurality of signals broadcasted from a plurality of external apparatus to be confusing for signal reception, the user terminal 12 may select a signal broadcasted from a display apparatus 11 located closest thereto based on signal strength of the broadcasted signals, thereby resolving the confusion for signal reception.

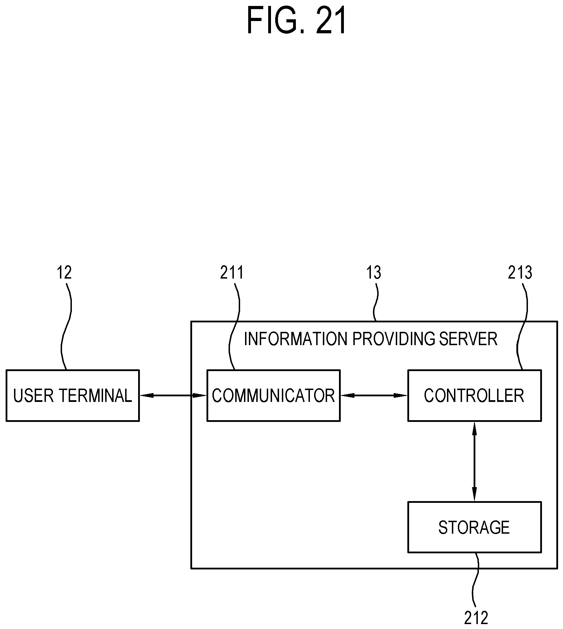

FIG. 21 is a block diagram illustrating a configuration of the information providing server 13 according to an exemplary embodiment. The information providing server 13 according to an exemplary embodiment may include a communicator 211, a storage 212, and a controller 213. The communicator 211 communicates with the communicator 122 of the user terminal 12 via the network. The storage 212 stores additional information for an image being displayed on the display apparatus 11. The additional information according to an exemplary embodiment includes various information related with the image being displayed on the display apparatus 11, and may include, for example, character information, product information, air time information, broadcasting information, and the like for the image being displayed on the display apparatus 11. The storage 212 may be implemented in the form of a database. The storage 212 may be provided in the information providing server 13, external to the information providing server 13, or in an apparatus separate from the information providing server 13. The controller 211 controls to provide the additional information for the image being displayed on the display apparatus 11 according to a request of the user terminal 12. The controller 211 may include a nonvolatile memory in which a control program is stored, a volatile memory in which at least a portion of the control program is loaded, and a microprocessor to execute the control program.

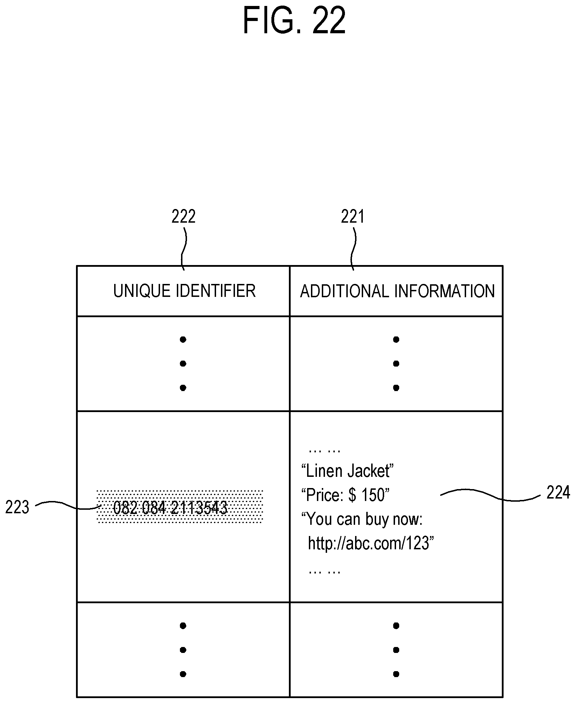

FIG. 22 illustrates additional information 221 stored in the storage 212 of the information providing server 13 according to an exemplary embodiment. The storage 211 stores the additional information 221 to be provided to the user terminal 12 according to unique identifiers 222. The unique identifiers 222 correspond to channel information for an image being displayed on the display apparatus 11. Referring again to FIG. 8, each unique identifier 222 may include a country code 82, a channel name 83, and time information 84 of the channel corresponding to the image being displayed on the display apparatus 11, and coincides with channel information, which is broadcasted by the display apparatus 11. For example, if an unique identifier 222 is "082 0842 113543" corresponding to 'Korea', 'MBC', and '11:35:43 a.m.', additional information 221 stored in the storage 212 may include information including "Linen Jacket", "Price: $ 150", "You can buy now; http://abc.com/123", etc., which is information 41 to be provided on a screen of the user terminal 12 illustrated in FIG. 4. As such, the information providing server 13 according to an exemplary embodiment stores the additional information 221 according to the unique identifiers 222, so that it may quickly and easily find out the additional information 221, thereby enhancing retrieval effectiveness, as compared with when having to use a plurality of queries in retrieval. Also, even when the additional information 221 is registered and managed, it may registered and managed according to unique identifiers 222 assigned to, for example, advertisers, respectively, thereby allowing the additional information 221 to be more effectively registered and managed.

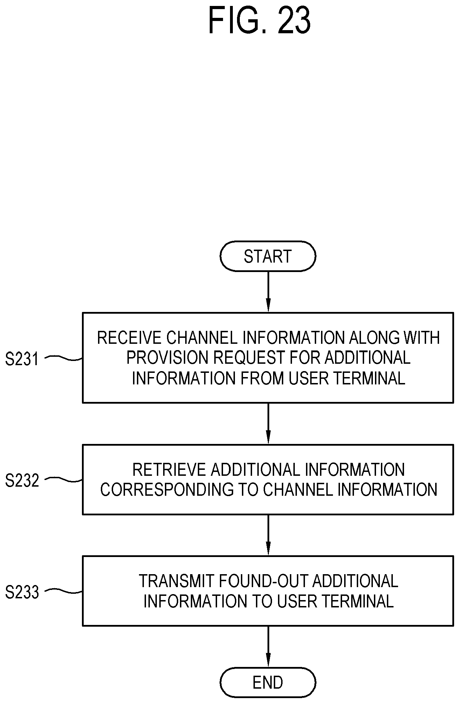

FIG. 23 is a flowchart illustrating a control method of the information providing server 13 according to an exemplary embodiment. First, at an operation S231, the information providing server 13 receives from the user terminal 12, channel information along with a provision request for additional information corresponding to the channel information. At an operation S232, the information providing server 13 retrieves the additional information corresponding to the received channel information from the storage 212. The information providing server 13 searches for the storage 212 using a unique identifier of the received channel information as a query to find out the additional information. Lastly, at an operation S233, the information providing server 13 transmits the additional information found-out as a result of the search to the user terminal 12.

While the exemplary embodiments have been shown and described with reference to various embodiments thereof, it will be understood by those skilled in the art that various changes in form and details may be made therein without departing from the present disclosure as defined by the appended claims and their equivalents.

## Claims

1. A display apparatus comprising:
a signal receiver configured to receive a signal for one of a plurality of channels;
a display configured to display an image of the one channel based on the received signal;
a signal transmitter configured to transmit a signal to at least one user terminal; and
a controller configured to, in response to the image being displayed on the display, control the signal receiver to broadcast a signal comprising channel information used for the at least one user terminal to receive additional information of the displayed image.

2. The apparatus according to claim 1, wherein the broadcasted signal further comprises first reference information indicating that the signal is being broadcasted.

3. The apparatus according to claim 1, wherein the broadcasted signal further comprises second reference information used to extract the channel information.

4. The apparatus according to claim 1, wherein the channel information comprises information on at least two of a channel name, a country, a zone or a time.

5. The apparatus according to claim 4, wherein the channel information comprises a unique identifier generated based on the information on the at least two.

6. The apparatus according to claim 5, wherein the unique identifier has a data size smaller than the information on the at least two.

7. The apparatus according to claim 1, wherein the controller is configured to control, so that in response to the one channel being changed, channel information of changed channel is included in the broadcasted signal.

8. The apparatus according to claim 1, wherein the broadcasted signal is periodically broadcasted.

9. The apparatus according to claim 1, wherein the controller is configured to control the signal transmitter to initiate the broadcasting of the signal in response to a user input.

10. The apparatus according to claim 1, wherein the controller is configured to control the signal transmitter to initiate the broadcasting of the signal in response to the at least one user terminal coming within a predetermined distance.

11. The apparatus according to claim 1, further comprising a connector configured to be connected with the least one user terminal,
wherein the controller is configured to control the signal transmitter to initiate the broadcasting of the signal in response to the least one user terminal being connected to the connector.

12. A control method of a display apparatus comprising:
receiving a signal for one of a plurality of channels;
displaying an image of the one channel based on the received signal; and
in response to the image being displayed on the display, broadcasting a signal comprising channel information used for at least one user terminal to receive additional information of the displayed image.

13. The method according to claim 12, wherein the channel information comprises information on at least two of a channel name, a country, a zone or a time

14. The method according to claim 12, wherein the broadcasted signal is periodically broadcasted.

15. A user terminal comprising:
a signal receiver configured to receive a signal comprising channel information for receiving additional information of an image displayed on a display apparatus, the signal being broadcasted from the display apparatus;
a communicator configured to communicate with a server; and
a controller configured to:
extract the channel information included in the received signal,
transmit the extracted channel information to the server,
receive the additional information of the image corresponding to the transmitted channel information from the server, and
perform a control on provision of the received additional information.

16. The terminal according to claim 15, wherein the controller is configured to the signal receiver to initiate the reception of the signal in response to a predetermined application being executed.

17. The terminal according to claim 15, wherein the controller is configured to control the signal receiver to receive the signal having predetermined signal strength or more.

18. A control method of a user terminal comprising:
receiving a signal comprising channel information for receiving additional information of an image displayed on a display apparatus, the signal being broadcasted from a display apparatus,;
extracting the channel information included in the received signal and transmitting the extracted channel information to a server;
receiving the additional information of the image corresponding to the transmitted channel information from the server; and
performing a control on provision of the received additional information.

19. The method according to claim 18, wherein the receiving the signal including the channel information comprises initiating the reception of the signal in response to a predetermined application being executed.

20. The method according to claim 18, wherein the receiving the signal including the channel information comprises receiving the signal having predetermined signal strength or more.
